# EUROPÄISCHE PATENTSCHRIFT

(11) **EP 2 302 234 B1**
(45) Veröffentlichungstag und Bekanntmachung des Hinweises auf die Patenterteilung: **11.11.2015**
(21) Anmeldenummer: 10009230.3
(22) Anmeldetag: 06.09.2010
(51) Int. Cl.: F16B 37/06

(54) **Selbstanzendes hohles Einpresselement, Zusammenbauteil bestehend aus einem Einpresselement und einem Blechteil sowie ein Verfahren zur Herstellung einer selbststanzenden Einpressmutter sowie zur Anbringung einer selbststanzenden Einpressmutter**
Self-stamping hollow force fitting element, assembly component comprising a force fitting element and a sheet metal section and method for producing self-stamping force fitting nut and attaching same
Elément de compression creux à estampillage automatique, composant constitué d'un élément de compression et d'un élément de tôle et procédé de fabrication d'un écrou de compression à estampillage automatique et d'installation d'un écrou de compression à estampillage automatique

(30) Priorität: 21.09.2009 DE 102009042336
(43) Veröffentlichungstag der Anmeldung: 30.03.2011
(60) Teilanmeldung: 15182246.7
(73) Patentinhaber: Profil Verbindungstechnik GmbH & Co. KG, 61381 Friedrichsdorf (DE)
(72) Erfinder: Babej, Jiri, 35423 Lich (DE)
(74) Vertreter: Manitz, Finsterwald & Partner GbR

(56) Entgegenhaltungen:
- EP-A2- 0 713 982
- EP-A2- 2 019 214
- WO-A1-01/73305

## Beschreibung

Die vorliegende Erfindung betrifft ein selbststanzendes hohles Einpresselement, ein Zusammenbauteil bestehend aus einem Einpresselement und einem Blechteil sowie ein Verfahren zur Herstellung einer selbststanzenden Einpressmutter sowie zur Anbringung einer selbststanzenden Einpressmutter.

Bei der Herstellung von Pkw-Karosserien und -Teilen ist es gang und gäbe, mit Befestigungselementen zu arbeiten, die in Form von Nietelementen, Stanz- und Nietelementen oder Einpresselementen vorliegen.

Bei einem Nietelement wird das Element in einem vorgelochten Blechteil eingesetzt und durch Umbördeln des Nietabschnitts des Befestigungselements am Blechteil vernietet. Das Befestigungselement selbst hat ein Befestigungsteil, d.h. entweder ein Innengewinde oder einen Bolzenschaft mit Außengewinde, wodurch ein weiteres Bauteil an das Blechteil unter Anwendung einer Schraube bzw. einer Mutter befestigt werden kann. Stanzelemente, die entweder in Form von Nietelementen oder Einpresselementen ausgebildet sein können, werden als selbststanzende Elemente bezeichnet, d.h. das Element schneidet selbst ein Loch in das Blechteil und wird anschließend am Blechteil befestigt. Bei bekannten Einpresselementen kann das Blechteil vorgelocht werden oder das Einpresselement kann, wie oben angedeutet, selbststanzend ausgebildet werden, d.h. so, dass es bei Anbringung an ein Blechteil unter den aufgewendeten Kräften selbst ein Loch in das Blechteil schneidet. Das Element wird durch das Loch hindurchgeführt und das Blechteil so verpresst, dass Blechmaterial in Hinterschneidungen des Einpresselements hineinfließt und das Einpresselement gegenüber dem Blechteil so verriegelt wird, dass es fest am Blechteil befestigt ist und nicht ohne weiteres axial aus dem Blechteil herausgepresst werden kann oder mit üblichen Drehmomenten, die bei der Anbringung einer Schraube bzw. einer Mutter entstehen, gegenüber dem Blechteil nicht verdreht werden kann. Einpresselemente werden im Gegenteil zu Nietelementen bei der Anbringung an ein Blechteil nicht verformt oder im Wesentlichen nicht absichtlich verformt.

Solche Befestigungselemente haben im Pkw-Bau zum großen Teil Schweißelemente verdrängt, die bisher an Karosserieblechen und dergleichen angeschweißt wurden. Das Anschweißen von Elementen lässt sich einerseits schlecht in die Herstellung der einzelnen Blechteile durch mechanische Verformung integrieren und führt auch zu einer ungewollten Verschmutzung des Blechteils. Ferner können Schweißelemente mit verschiedenen Blechteilen nicht verwendet werden, beispielsweise dann nicht, wenn diese vorlackiert sind oder aus zwei Blechteillagen bestehen, gegebenenfalls mit einer dazwischen gelegten Kunststoffmembran. Sie können auch dann nicht verwendet werden, wenn es sich bei dem Blechteil um ein hochfestes Blechteil handelt, da die mit der Anschweißung einhergehende Wärme zu einer unannehmbaren Herabsetzung der Blecheigenschaften im Bereich der Anschweißstelle führt. Bei der Herstellung von Blechteilen für Pkws werden große Stückzahlen benötigt und die in Frage kommenden Blechteildicken liegen üblicherweise im Bereich von 0,6 mm bis 2,5 mm, gelegentlich darüber hinaus bis 3 mm oder etwas mehr.

Die DE 10 2007 034 987 A1 beschreibt ein Einpresselement, das als selbststanzendes Element ausgebildet sein kann und das zur Anbringung in dicken Blechteilen geeignet ist. Das dort gezeigte Einpresselement hat einen Kopfteil mit einer dem Blechteil zugewandten Ringfläche und einem Halsteil der von der Ringfläche d.h. von der Blechanlagefläche wegragt, wobei der Kopfteil ferner einen den Halsteil mit radialem Abstand umgebenden und von der Ringfläche wegragenden ringförmigen Vorsprung aufweist und der Halsteil einen radial nach außen ragenden Ringwulst aufweist, der als kontinuierliche Ringwulst oder als eine stellenweise unterbrochene Ringwulst ausgebildet sein kann, dessen Spitze einen axialen Abstand von der Ringfläche hat, der größer ist als der axiale Abstand der Spitze des ringförmigen Vorsprungs von der Ringfläche. Der Ringwulst liegt radial innerhalb dieses Vorsprungs und bildet mit diesem eine ein Material des Blechteils aufnehmende Tasche. Ein derartiges Einpresselement hat durchaus seine Berechtigung, ist jedoch in der Herstellung relativ aufwendig. Ferner kann die Ausbildung im Bereich der Ringfläche und unmittelbar unterhalb der Ringfläche am Halsteil unter Umständen zu gewissen Schwierigkeiten bei der Anbringung am Blechteil führen, derart, dass die erwünschte angestrebte formschlüssige Verriegelung mit dem Blechteil unter Umständen nicht immer im erwünschten Maße sichergestellt ist.

An dieser Stelle soll auch auf das europäische Patent EP-B-1 690 913 verwiesen werden. Hier wird ein weiteres Funktionselement beschrieben, das eine ringförmige Blechauflagefläche auf der Unterseite eines Kopfteils und einen von diesem wegragenden Halsteil hat, der hier als Stanzabschnitt ausgebildet ist. Dieses Funktionselement zeichnet sich dadurch aus, dass es mit Blechteilen verschiedener Dicken verwendet werden kann. Zu diesem Zweck wird ein ringförmiger Wulst am Stanzabschnitt zwischen der ringförmigen Blechauflagefläche und dem freien Ende des Stanzabschnitts vorgesehen und es wird ferner eine Ringvertiefung zwischen dem Wulst und dem freien Stellende des Stanzabschnitts um den Stanzabschnitt herum vorgesehen. Ferner werden Verdrehsicherungsrippen vorgesehen, die sich erhaben innerhalb einer weiteren Ringnut zwischen der Blechauflagefläche und dem Wulst in axialer Richtung bis zum Wulst erstrecken. Ein solches Element ist durchaus imstande, seine Aufgabe zu erfüllen, ist jedoch relativ aufwendig und auch nicht gut geeignet, um selbststanzend in wirklich dicken Blechteilen im Bereich von 4 mm Dicke und mehr eingebracht zu werden.

In der EP-B-1 690 013 wird zum Ausdruck gebracht, dass das Element mit Blechteildicken im Bereich zwischen 0,6 mm und 4 mm verwendet werden kann, wobei Blechteildicken oberhalb von 3 mm im Pkw-Bau relativ selten sind. Befestigungselemente finden auch bei der Herstellung von Lkws Anwendung, jedoch in einem weitaus geringeren Ausmaß. Im Wesentlichen ist nur die Anwendung von Nietelementen aus der Pkw-Herstellung bekannt, die auch in dünnen Blechteilen von Lkws, beispielsweise im Bereich der Fahrerkabine, zur Anwendung gelangen. Stabilere Blechteile der Lkws d.h. mit Blechdicken größer als 3 mm und üblicherweise von 4 mm und noch größer sind - wenn überhaupt - nur in den seltensten Fällen mit Nietelementen versehen, da die verfügbaren Nietelemente eben nicht für solche dicken Blechteile ausgelegt sind. Ferner werden weitaus weniger Lkws im Vergleich zu Pkws hergestellt. Bei der Lkw-Herstellung werden derzeit Schweißelemente in größerem Umfang verwendet.

EP 2 019 214 A2 offenbart ein weiteres Einpresselement für dicke Blechteile.

Die Aufgabe der vorliegenden Erfindung ist es, ein selbststanzendes Einpresselement sowie einem Verfahren zur Herstellung einer solchen Einpressmutter bzw. eines Zusammenbauteils vorzuschlagen, das selbst bei geringen Stückzahlen kostengünstig hergestellt bzw. durchgeführt und rational verwendet werden kann. Zur Lösung dieser Aufgabe wird erfindungsgemäß, gemäß einem ersten Ansatz der vorliegenden Erfindung ein selbststanzendes hohles Einpresselement, insbesondere Mutterelement zur Anbringung an ein Blechteil vorgesehen, wobei das Einpresselement einen Flanschteil größeren Durchmessers und einen Schaftteil kleineren Durchmessers aufweist, wobei der Schaftteil sich vom Flanschteil weg erstreckt und an seinem dem Flanschteil abgewandten Stirnende eine kreisförmige Stanzkante aufweist, wobei die dem Schaftteil zugewandte Seite des Flanschteils eine ringförmige Blechanlagefläche bildet und Verdrehsicherungsmerkmale am Schaftteil vorgesehen sind, die sich von etwa der Höhe der Blechanlagefläche über einen Teil der Länge des Schaftteils an diesem entlang erstrecken, mit dem besonderen Kennzeichen, dass radial innerhalb der ringförmigen Blechanlagefläche eine ringförmige Vertiefung im Flanschteil vorgesehen ist und dass überschüssiges Material des Schaftteils, das durch Herstellung der Verdrehsicherungsrippen entsteht, sich innerhalb der ringförmigen Vertiefung befindet.

Durch diese Auslegung kann ein scharfer Übergang zwischen der ringförmigen Blechanlagefläche und dem Schaftteil geschaffen werden, wodurch das Element selbststanzend in das Blechteil eingebracht werden kann und sichergestellt wird, dass der Flanschteil satt an das Blechteil anliegt und keine störenden Radien oder Merkmale im Übergangsbereich vorgesehen sind, die einen festen Sitz der ringförmigen Anlagefläche an das Blechteil verhindern könnte. Hierdurch kann das Element fest mit dem Blechteil verpresst werden, ohne dass ein Abstand zwischen der Blechanlagefläche und der dieser gegenüberliegenden Seite des Blechteils sich ergibt.

Hierdurch werden Setzungserscheinungen im Betrieb einwandfrei vermieden, wodurch die in das hohle Einpresselement eingeschraubte Schraube stets die vorgegebene Spannung beibehält und die Schraubverbindung durch Setzungserscheinungen beispielsweise verursacht durch Vibrationen nicht vorzeitig locker wird bzw. versagt. Mittels der beanspruchten Ausbildung kann ein Einpresselement mit verschiedenen Blechdicken verwendet werden.

Gemäß einer bevorzugten Ausführungsform werden Verdrehsicherungsmerkmale vorgesehen, die durch Verdrehsicherungsnasen bzw. Rippen gebildet sind, die sich in axialer Richtung des Schaftteils an diesem entlang erstrecken.

Besonders günstig ist es bei einer Konstruktion dieser Art, wenn bei der Herstellung der Verdrehsicherungsmerkmale die genannten Rippen bzw. Nasen dadurch entstehen, dass ein Werkzeug mit entsprechenden Nuten über das Schaftteil des Einpresselements gesetzt wird und Material aus dem Bereich zwischen den Rippen und Nasen teilweise in die Rippen bzw. Nasen hinein verdrängt und teilweise axial verschiebt bis in die ringförmige Vertiefung im Flanschteil, wo sozusagen das überschüssige Material versteckt werden kann und zwar ohne dem scharfen Übergang von der ringförmigen Blechanlagefläche in die Außenseite des Schaftteils hinein zu verhindern.

Gemäß einem weiteren erfindungsgemäßen Ansatz wird ein selbststanzendes hohles Einpresselement insbesondere Mutterelement zur Anbringung an ein Blechteil vorgesehen, wobei das Einpresselement einen Flanschteil größeren Durchmessers und einen Schaftteil kleineren Durchmessers aufweist, wobei der Schaftteil sich vom Flanschteil weg erstreckt und an seinem dem Flanschteil abgewandten Stirnende eine kreisförmige Stanzkante aufweist, wobei die dem Schaftteil zugewandte Seite des Flanschteils eine ringförmige Blechanlagefläche bildet, mit dem besonderen Kennzeichnen, dass der Durchmesser D2 bei einer M6 Mutterelement bei etwa 15 mm, einer M8 Mutterelement bei etwa 16 mm, einer M10 Mutterelement bei etwa 17 mm, einer M 12 Mutterelement bei etwa 18 mm und einer M16 Mutterelement bei etwa 19,5 mm liegt.

Die oben angegebenen Durchmesser des Schaftteils reichen ohne weiteres aus, um Stanzbutzen in Blechteilen mit einer Dicke von 8 mm zu erzeugen, vorausgesetzt dass die Blechteile eine moderate Festigkeit im Bereich von 280 bis 320 MPa aufweisen.

Grundsätzlich kann ein selbststanzendes Einpresselement vorgesehen sein, insbesondere ein Mutterelement zur Anbringung an ein Blechteil, wobei das Einpresselement einen Flanschteil größeren Durchmessers und einen Schaftteil kleineren Durchmessers aufweist, wobei der Schaftteil sich vom Flanschteil weg erstreckt und an seinem dem Flanschteil abgewandten Stirnende eine kreisförmige Stanzkante aufweist, wobei die dem Schaftteil zugewandte Seite des Flanschteils eine Blechanlageschulter bildet, mit dem besonderen Kennzeichen, dass das Einpresselement keine als Hinterschneidung ausgebildeten Formmerkmale aufweist, die zur Aufnahme von Blechmaterial zur Erzielung eines axialen Auspresswiderstands gebildet sind.

Eine derartige Ausbildung des Einpresselements ist zunächst als überraschend anzusehen, da man sich die Frage stellen muss, wie wird dann der axiale Widerstand gegen Auspresslast und Blechteil erzeugt, wenn keine Hinterschneidungen vorgesehen sind. Die Antwort darauf liegt darin, ein Zusammenbauteil vorzusehen, d.h. bestehend aus einem Befestigungselement und einem Blechteil, wobei das Befestigungselement einen Flanschteil größeren Durchmessers und einen Schaftteil kleineren Durchmessers aufweist, der sich vom Flanschteil weg erstreckt und an seinem dem Flanschteil abgewandten freien Stirnende eine kreisförmige Stanzkante aufweist, deren Durchmesser dem des Schaftteils entspricht oder geringfügig größer als dieser ist, wobei die dem Schaftteil zugewandte Seite des Flanschteils eine ringförmige Blechanlagefläche bildet, mit dem besonderen Kennzeichen, dass das Befestigungselement als Einpresselement zur Anwendung mit Blechteilen mit Dicken im Bereich von 3 mm und größer ausgelegt ist und dass der Schaftteil sich innerhalb eines Stanzloches im Blechteil befindet, der in einem ersten Bereich benachbart zur Blechanlagefläche sowie in einen zweiten Bereich benachbart zur Stanzkante eng am Schaftteil anliegt und dass in einem dritten Bereich zwischen dem ersten und dem zweiten Bereich die Lochwand des Blechteils vom Schaftteil einen Abstand aufweist.

Diese Konstruktion beruht auf dem Konzept, dass das Blechteil zunächst konisch vorgelocht wird, in dem Sinne, dass das Loch konusförmig von der Einstanzseite des Elements weg divergiert und nach dem vollständigen Einsetzen des Einpresselements in das konusförmige Stanzloch das Blechmaterial auf der dem Flanschteil des Elements entgegengesetzte Seite des Blechteils um das Stanzloch herum so gequetscht wird, dass es radial nach innen bewegt und satt an den Stanzabschnitt des Einpresselements im genannten dritten Bereich anliegt. Da eine satte Anlage im ersten Bereich des Stanzabschnitts ohnehin gegeben ist, wird das Einpresselement gut ausgerichtet im Blechteil gehalten und die Tatsache, dass im dritten Bereich ein Spalt vorliegt, wirkt sich nicht nachteilig auf die Stabilität der Montage des Einpresselements am Blechteil aus. Durch die satte Anlage des Blechteils im genannten zweiten Bereich greift das Material des Blechteils in die ohnehin vorhandenen Unebenheiten der Oberfläche des Stanzabschnitts und bewirkt einen äußerst ausgeprägte Würgegriff in diesem Bereich, wodurch die notwendige Verdrehsicherheit und Auspresssicherheit gegeben ist. Diesem Würgegriff zugute kommt die Tatsache, dass der Stanzabschnitt selbst in seiner radialen Abmessung relativ dick ausgebildet sein muss, um die erforderliche Stanzwirkung in dem Blechteil zu erreichen und somit einen großen Widerstand gegen das sich radial nach innen bewegende Blechmaterial bietet. Eine Konstruktion dieser Art ist auch deshalb nicht nahe liegend, weil der Fachmann erwarten müsste, dass bei einer konusförmigen Vorlochung des Blechteils das Element absolut unzureichend im Blechteil gehalten wird und zwar insbesondere dann, wenn keine Hinterschneidungsmerkmale vorgesehen sind. Bei dicken Blechteilen ist es ohnehin schwierig, solche Hinterschneidungen ausreichend mit Blechmaterial zu füllen.

Falls erforderlich kann die notwendige Verdrehsicherheit bzw. Auspresssicherheit auch dadurch erreicht werden, dass ein Klebstoff sich zwischen den Blechteilen und dem hohen Einpresselement befindet und zwar entweder zwischen dem Blechteil und der Blechanlagefläche und/oder zwischen dem Blechteil und dem ersten Bereich des Schaftteils und/oder zwischen dem Blechteil und dem zweiten Bereich des Schaftteils und/oder zwischen dem Blechteil und dem dritten Bereich des Schaftteils. Es handelt sich bei dem Klebstoff vorzugsweise um einen Klebstoff, der unter Druck aushärtet. Solche Drücke entstehen in allen der oben genannten Bereiche während des Einpressens des Einpresselements. Sie entstehen auch im dritten Bereich des Schaftteils, da der hier vorgesehene ursprüngliche große Raum durch das Entstehen des Würgegriffs im zweiten Bereich des Schaftteils verkleinert wird, wodurch der dort herrschende Druck steigt.

Selbst wenn eine ausreichende Verdrehsicherheit auch ohne Verdrehsicherungsmerkmale erreichbar ist, können Verdrehsicherungsmerkmale am Schaftteil vorgesehen und von etwa der Höhe der Blechanlagefläche über einen Teil der Länge des Schaftteils an diesem entlang erstrecken wobei im Zusammenbauteil im genannten ersten Bereich das Blechteil formschlüssig an den dort vorgesehenen Verdrehsicherungsmerkmalen anliegt.

Das Zusammenbauteil, das bei der Anbringung des Einpresselements entsteht, zeichnet sich weiter aus, dass das Blechteil auf dessen der Blechanlageschulter abgewandten Seite eine ringförmige Vertiefung um die Stanzkante herum aufweist. Insofern liegt das Blechteil zumindest im Bereich der Anbringung des Befestigungselements vor und nach Anbringung des Befestigungselements bis auf die genannte Vertiefung in einer Ebene was der Anschraubsituation bei der Anwendung eines weiteren Bauteils an das Blechteil zugute kommt.

Die Verdrehsicherungsmerkmale sind vorzugsweise durch Verdrehsicherungsnasen bzw. -rippen gebildet, die sich in axialer Richtung des Schaftteils an diesem entlang erstrecken. Es befinden sich dann im Blechteil die den Verdrehsicherungsnasen bzw. -rippen entsprechenden Vertiefungen. Das Einpresselement ist vorzugsweise ein Befestigungselement mit einem hohlen Schaftteil mit einem mittleren Gewinde, das sich durch den Flanschteil und den Schaftteil hindurch erstreckt. Durch die ausgeprägte radiale Dicke des Schaftteils ist nicht zu befürchten, dass das Schaftteil bei der Anbringung am Blechteil verstaucht wird, so dass das Befestigungselement auch bei Schaffung einer ausreichenden Gewindelänge nicht übermäßig hoch baut und deshalb auch nicht übermäßig schwer ist.

Ein Verfahren zur Herstellung einer selbststanzenden Einpressmutter mit einem Flanschteil größeren Durchmessers und einem sich vom Flanschteil weg erstreckenden Schaftteil kleineren Durchmessers, wobei der Schaftteil an seinem dem Flanschteil abgewandten Stirnseite eine kreisförmige Stanzkante aufweist, zeichnet sich vorzugsweise dadurch aus, dass man einen Rohling mit einer Querschnittsform entsprechend der des Flanschteils und des Schaftteils nimmt, wobei beim Rohling der Schaftteil im Bereich des freien Endes einen kleineren Durchmesser aufweist als im Bereich benachbart zum Flanschteil, dass eine axiale Vertiefung im Flanschteil benachbart zum Schaftteil gebildet wird und dass mittels eines Schiebers Material vom Bereich des Schaftteils mit dem größeren Durchmesser an mehreren umfangsmäßig einen Abstand aufweisenden Stellen axial weggeschabt wird, wobei das weggeschabte Material in die axiale Vertiefung des Flanschteils hineingebracht wird und in Bereichen zwischen den weggeschabten Bereichen Nasen bzw. Rippen verbleiben, die Verdrehsicherungsmerkmale des Elementen bilden.

Ein erfindungsgemäßes Verfahren zur Anbringung eines erfindungsgemäßen selbststanzenden Einpresselements an ein Blechteil zeichnet sich dadurch aus, dass das Blechteil auf einer Matrize abgestützt wird, die eine zylindrische Öffnung aufweist mit einem Durchmesser größer als der Durchmesser des Schaftteils im Bereich zur kreisförmigen Stanzkante, dass durch Druck auf den Flanschteil des selbststanzenden Einpresselements dessen Schaftteil zur Bildung eines Stanzlochs im Blechteil durch dieses hindurch gepresst wird, wodurch das Stanzloch in Einpressrichtung bezogen auf die Längsachse des Stanzloches in etwa konusförmig divergiert und nach Ausbildung des entsprechenden Stanzbutzens das Blechmaterial im Bereich um die Stanzkante herum zur Ausbildung einer ringförmigen Vertiefung im Blechteil mittels einer Ringnase der Matrize eingepresst wird, wodurch das Blechmaterial radial nach innen verformt wird und sich am Schaftteil des Einpresselementes im Bereich dessen freien Endes anliegt.

Bevorzugte Ausführungsformen der Erfindung sind in den Patentansprüchen und in der nachfolgenden Beschreibung unter Bezugnahme auf die hier beigefügten Figuren näher beschrieben. In der Zeichnung zeigen:
- Fig. 1A: eine Stirnansicht auf den Stanzabschnitt eines erfindungsgemäßen Einpresselements in Form einer Einpressmutter,
- Fig. 1B: eine Seitenansicht der erfindungsgemäßen Einpressmutter gemäß Fig. 1A teilweise im axialen Schnitt,
- Fig. 1C: eine perspektivische Darstellung einer erfindungsgemäßen Einpressmutter gemäß Fig. 1A,
- Fig. 1D: eine Darstellung ähnlich der Fig. 1B, jedoch von einem Rohling zur Herstellung des Elements gemäß Fig. 1A bis 1C,
- Fig. 1E: eine vergrößerte Darstellung des in einem Kreis gezeigten Bereichs der Fig. 1 D
- Fig. 2A: eine schematische Darstellung der Anbringung der erfindungsgemäßen Einpressmutter gemäß Fig. 1A bis 1C an einem dickeren Blechteil in einem Ausgangsstadium vor dem Durchstanzen des Blechteils,
- Fig. 2B: eine Darstellung ähnlich der Fig. 2A jedoch nach dem Durchstanzen des Blechteils aber vor dem endgültigen Anbringen der Einpressmutter am Blechteil,
- Fig. 2C: eine Darstellung des fertig gestellten Zusammenbauteils, d.h. nach vollständiger Anbringung der erfindungsgemäßen Einpressmutter am Blechteil,
- Fig. 2D: eine vergrößerte Darstellung des eingekreisten Bereichs der Fig. 2C,
- Fig. 2E: eine perspektivische Darstellung auf der Oberseite des Blechteils gemäß Fig. 2C und
- Fig. 2F: eine perspektivische Darstellung auf der unteren Seite des Blechteils gemäß Fig. 2C, und
- Fig. 3A - 3E: Darstellungen entsprechend der in den Fig. 2A, 2C, 2D 2E bzw. 2F für die Anbringung der gleichen Einpressmutter an einem dünneren dicken Blechteil.

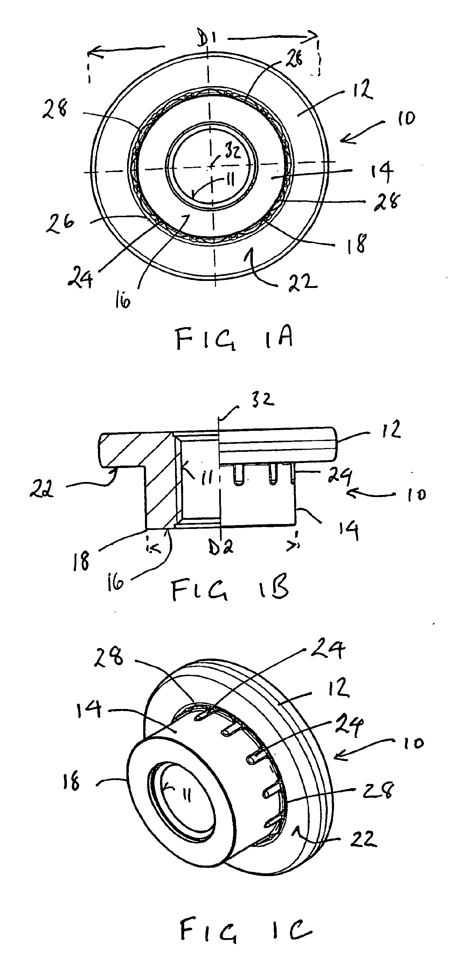

Die Fig. 1A bis 1C zeigen ein selbststanzendes hohles Einpresselement 10 in Form einer Mutterelement zur Anbringung an ein Blechteil. Das Einpresselement 10 weist einen Flanschteil 12 größeren Durchmessers D1 und einen Schaftteil 14 kleineren Durchmessers D2 auf, wobei der Schaftteil 14 sich vom Flanschteil 12 weg erstreckt und an seinem dem Flanschteil 12 abgewandten Stirnende 16 eine kreisförmige Stanzkante 18 hat. Die dem Schaftteil 14 zugewandte Seite des Flanschteils 12 bildet eine ringförmige Blechanlagefläche 22 bildet und Verdrehsicherungsmerkmale 24 sind am Schaftteil vorgesehen. Diese erstrecken sich von etwa der Höhe der Blechanlagefläche 22 über einen Teil der Länge des Schaftteils 14 bspw. über etwa 40 % der Länge des Schaftteils 14 an diesem entlang.

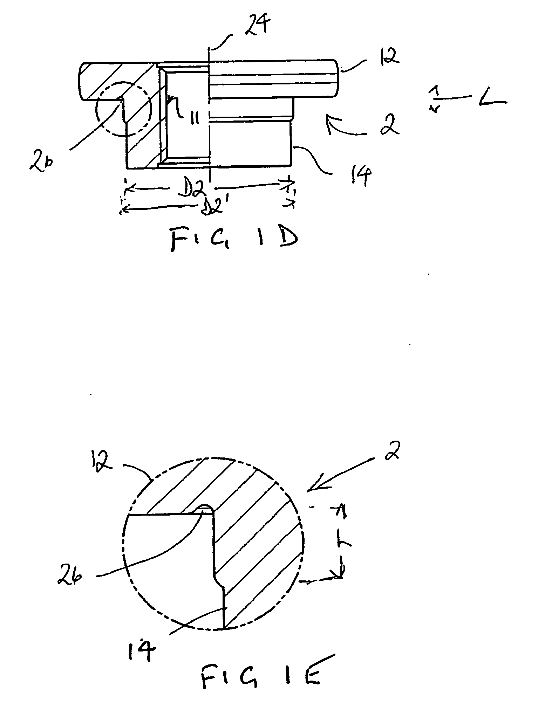

Radial innerhalb der ringförmigen Blechanlagefläche 22 ist eine ringförmige Vertiefung 26 im Flanschteil 12 vorgesehen, die am besten am Rohling gemäß Fig. 1D bzw. 1E zu erkennen ist, die das überschüssiges Material 28 des Schaftteils 14, das durch Herstellung der Verdrehsicherungsrippen entsteht, aufnimmt, d.h. das überschüssige Material 28 befindet sich innerhalb der ringförmigen Vertiefung 26.

Das Verfahren zur Herstellung der selbststanzenden Einpressmutter gemäß den Fig. 1A bis 1C wird so durchgeführt, dass man zunächst einen Rohling 2 gemäß der Fig. 1D bzw. 1E mit einer Querschnittsform entsprechend der des Flanschteils 12 und des Schaftteils 14 nimmt, bzw. durch Kaltschlagen fertigt, wobei der Rohling 2 so ausgelegt ist, dass der Schaftteil 14 im Bereich des freien Endes den Durchmesser D2 aufweist aber in einem Bereich benachbart zum Flanschteil, der sich über die Länge L der erwünschten Verdrehsicherungsmerkmale 24 erstreckt einen größeren Durchmesser D2' hat. Es wird dann (oder vorher) die axiale Vertiefung 26 im Flanschteil 12 benachbart zum Schaftteil 14 gebildet und anschließend mittels eines Schiebers, der über den Bereich des Schaftteils mit dem Durchmesser D2 passt und Nuten entsprechend den Verdrehsicherungsrippen aufweist, Material vom Bereich des Schaftteils mit dem größeren Durchmesser D2' an mehreren umfangsmäßig einen Abstand aufweisenden Stellen axial weggeschabt, wobei das weggeschabte Material 28 mindestens teilweise in die axiale Vertiefung 26 des Flanschteils 12 hineingebracht wird. In den Bereichen zwischen den weggeschabten Bereichen verbleiben die Verdrehsicherungsnasen bzw. -rippen, die die Verdrehsicherungsmerkmale 24 des Elementes bilden. Der Durchmesser D2' des Bereiches des Schaftteils mit dem etwas größeren Durchmesser (größer als D2) muss nicht so Groß sein wie D2 plus zweimal die radiale Höhe der Verdrehsicherungsrippen 24, sondern kann etwas kleiner ausgebildet werden (aber größer als D2), wobei die Verdrehsicherungsrippen dann teilweise aus dem zwischen den Rippen verdrängtem Material entstehen und damit die volle radiale Höhe erreichen.

Wie ersichtlich erstrecken sich die Verdrehsicherungsmerkmale 24, die durch Verdrehsicherungsnasen bzw. -rippen gebildet sind, in axialer Richtung 32 des Schaftteils 14 an diesen entlang erstrecken.

Das selbststanzende hohle Mutterelement ist so ausgelegt dass der Durchmesser D2 bei
einer M6 Mutterelement bei etwa 15 mm,
einer M8 Mutterelement bei etwa 16 mm,
einer M10 Mutterelement bei etwa 17 mm,
einer M 12 Mutterelement bei etwa 18 mm und
einer M16 Mutterelement bei etwa 19,5 mm liegt.

Diese Werte für den Durchmesser D2 gelten insbesondere zur Anwendung mit einem Blechteil aus Stahl mittlerer Festigkeit von 280 bis 320 MPa und einer Dicke von etwa 8 mm. Bei höheren Blechfestigkeiten müssen die angegebenen Durchmesser entsprechend vergrößert werden. Das gleiche gilt für Blechdicken oberhalb von 8 mm.

Man kann das erfindungsgemäße selbststanzende Mutterelement 10 zur Anbringung an ein Blechteil auch so betrachten, dass es keine als Hinterschneidung ausgebildeten Formmerkmale aufweist, die zur Aufnahme von Blechmaterial zur Erzielung eines axialen Auspresswiderstands gebildet sind. Stattdessen ist der Übergang von der ringförmigen Blechanlagefläche 22 in den Stanzabschnitt 14 als scharf rechtwinkelig anzusehen, wenn man von der Ringvertiefung 26 und das darin versteckte Material 28 absieht, die bzw. das ohnehin nicht stört, da sie bzw. es gegenüber die ringförmige Blechanlagefläche 22 zurückversetzt liegt.

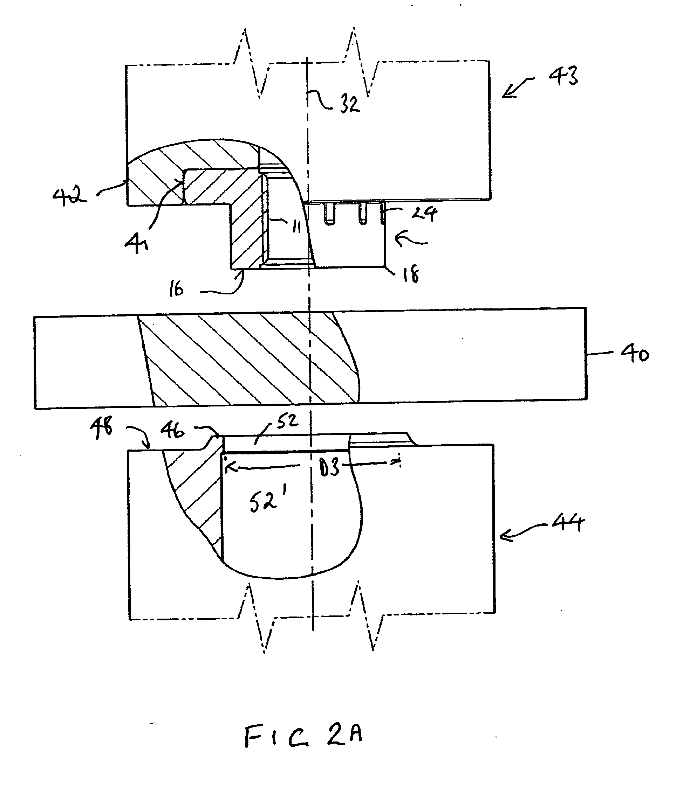

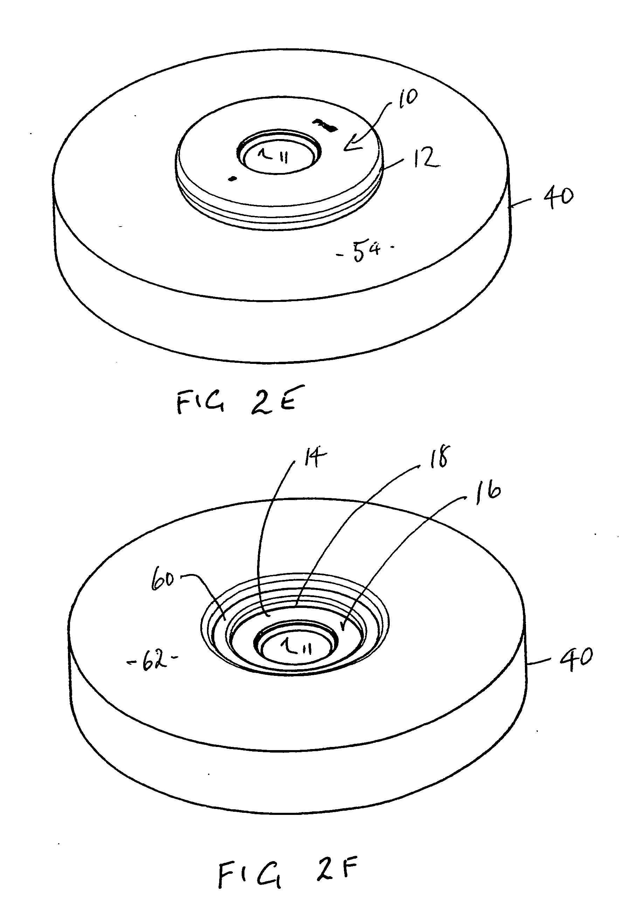

Das Verfahren zur Anbringung der selbststanzenden Einpressmutter gemäß den Fig. 1A bis 1C an ein Blechteil 40 wird nunmehr Anhand der Fig. 2A bis 2E näher erläutert. Die Fig. 2A zeigt die Ausgangssituation in der die Einpressmutter 10 mit ihrem Flanschteil in einer Aufnahme 41 eines Stempels 42 eines Stanzkopfs 43 gehalten wird, das bspw. am oberen Werkzeug einer Presse (nicht gezeigt) angebracht ist. Unterhalb des Blechteils 40 befindet sich hier eine Matrize 44 die bspw. am unteren Werkzeug einer Presse oder an einer Zwischenplatte einer Presse abgestützt sein kann. Wenn die Matrize 44 am unteren Werkzeug einer Presse angebracht ist und eine Zwischenplatte vorhanden ist, kann der Stanzkopf anstelle am oberen Werkzeug der Presse an der Zwischenplatte angebracht werden.

Es soll darauf hingewiesen werden, dass es auch möglich wäre, die Matrize an der Zwischenplatte der Presse und den Stempel im oberen Werkzeug der Presse oder den Stempel am unteren Werkzeug der Presse und die Matrize oberhalb des Stempels am oberen Werkzeug der Presse oder an der Zwischenplatte der Presse anzubringen. Auch könnte der Stempel an der Zwischenplatte der Presse angebracht werden und die Matrize am oberen Werkzeug der Presse. Ferner bestünde die Möglichkeit, die Matrize und den Stempel in einem so genannten C-Gestell zu montieren und durch entsprechende hydraulische Belastung des einen oder anderen Teils, d.h. die Matrize oder den Stempel, die Lochung des Blechteils vorzunehmen. Der Stempel kann Teil eines Setz- bzw. Stanzkopfes entsprechend der EP-B-755 749 ausgebildet werden.

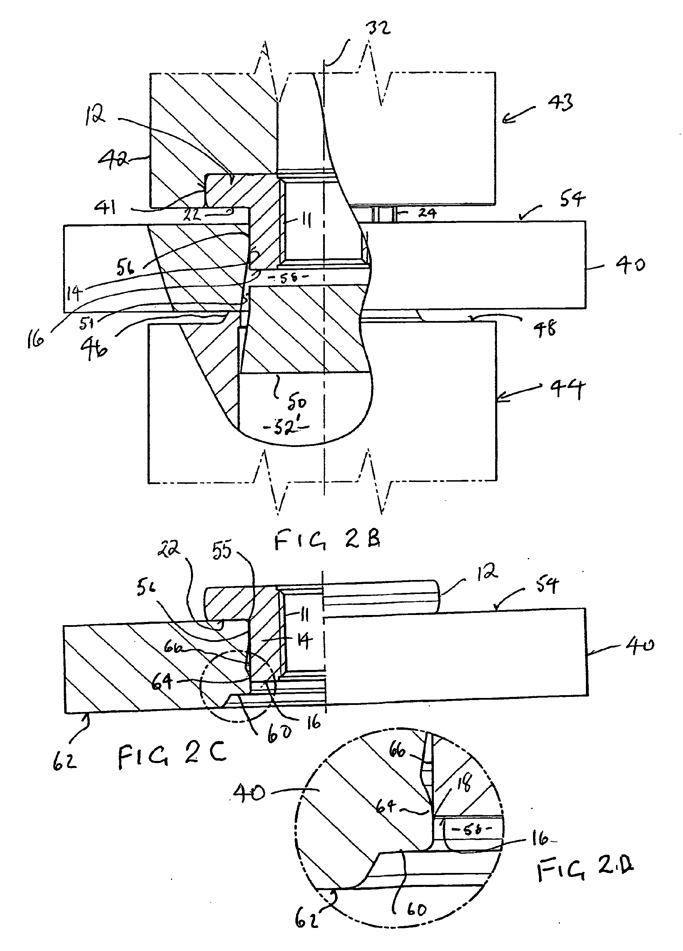

Wie auch aus der Fig. 2B ersichtlich wird das Blechteil 40 in der Presse zwischen der Matrize 44 im unteren Werkzeug der Presse und dem Stempel des Stanzkopfes im oberen Werkzeug der Presse oder in einer Zwischenplatte der Presse eingeklemmt, zunächst zwischen dem freien Stirnende 16 des Schaftteils 14 der Einpressmutter 10 und der Ringnase 46 am oberen Stirnseite 48 der Matrize. In Fig. 2A und 2B nicht gezeigt - aber durchaus üblich - wäre das Vorsehen eines Niederhalters, bspw. eines kreiszylindrischen Niederhalters, der um den Stempel 42 herum angeordnet ist, mit Federdruck gegen das Blechteil 40 gedrückt wird und das Blechteil an die Ringnase 46 der Matrize 44 hält.

Die Matrize 44 weist eine Bohrung 52 auf, mit einem Durchmesser, der etwas größer ist als der Durchmesser D2 des Stanzabschnitts 14. Bei der Schließung der Presse wird der Stanzabschnitt durch das Blechteil 40 hindurch gestoßen und es entsteht ein Stanzbutzen 50, der durch die Bohrung 52, 52' der Matrize hindurch gepresst und entsorgt wird. Dadurch, dass der Durchmesser D3 der Bohrung 52 der Matrize im Bereich der Stirnseite 48 der Matrize 44 deutlich größer ist als der Durchmesser D2 entsteht eine konusförmige Öffnung bzw. Loch 58 im Blechteil, die bzw. das sich in axialer Richtung 32 von der Einstanzseite ausgehend divergiert. Die Konizität, die bspw. einem eingeschlossenen Konuswinkel im Bereich von 4 bis 15°, vorzugsweise etwa 7° entspricht, wird durch den Verhältnis des Durchmessers D3 zu D2 und die jeweilige Blechdicke bestimmt. Die Bohrung 52, 52' der Matrize 44 wird vorzugsweise als Stufenbohrung ausgelegt mit einem unteren Bereich 52' größeren Durchmessers im Vergleich zum oberen Bereich mit dem Bezugszeichen 52. Hierdurch wird sichergestellt, dass der Stanzbutzen durch die Bohrung 52' hindurch fällt und somit leicht zu entsorgen ist.

Der Schafteil 14 des Befestigungselements 10 wird durch den oberen zylindrischen Bereich 56 des Stanzloches 58, der zugleich einem oberen Bereich des Schaftteils entspricht, hindurchgepresst bis die ringförmige Blechanlagefläche bzw. -schulter 22 des Flanschteils 12 an der in Fig. 2C oberen Seite 54 des Blechteils anliegt und die Verdrehsicherungsmerkmale bzw. -nasen 24 sich in die Lochwand des oberen zylindrischen Bereichs 56 der Lochung 58 des Blechteils eingegraben haben.

Man merkt aus Fig. 2C, dass der Scharfkantige Übergang 55 von der Blechanlagefläche 22 in den Stanzabschnitt 14 sicherstellt, dass die Blechanlagefläche 22 satt auf der Oberseite 54 des Blechteils sitzt wodurch Setzungserscheinungen im Betrieb nicht zu befürchten sind (vorausgesetzt, dass die ringförmige Blechanlagefläche 22 ausreichen Groß ausgebildet ist).

Durch Schließen der Presse wird das Befestigungselement von einer Stelle oberhalb des Blechteils 40 so bewegt, dass der Schaftteil 14 des Befestigungselements sich durch die entstehende Lochung 58 hindurchbewegt, bis die Ringnase 46 der Matrize eine Ringnut 60 in der Unterseite 62 des Blechteils 40 um die Lochung 58 herum gebildet hat. Hierdurch wird Blechmaterial gezwungen radial nach innen zu fliesen und es kommt in einem zweiten Bereich 64 benachbart dem freien Ende des Stanzabschnitts zu dem oben erwähnten innigen Kontakt des Blechmaterials und dem Würgegriff mit dem unteren Bereich des Stanzabschnitts 14. Zwischen dem ersten Bereich 56 und dem zweiten Bereich 64 in denen das Blechmaterial eng am Stanzabschnitt bzw. Stanzteil 14 anliegt, befindet sich ein dritter Bereich 66, wo die Lochwand des Blechteils vom Schaftteil 14 einen Abstand aufweist.

Die Presse (oder das evtl. verwendete C-Gestell) liefert die erforderliche Kraft, um die Verdrehsicherungsnasen 24 durch die Seitenwand 51 der Lochung hindurchzupressen, wodurch die sich in axialer Richtung erstreckenden Furchen im zylindrischen Bereich 56 der Seitenwand der Lochung 58 durch die Verdrehsicherungsnasen 24 geformt werden, sowie die Kraft, die erforderlich ist, um die Ringnut 60 auszubilden und das Blechmaterial in diesem Bereich 64 umzuformen.

Man merkt außerdem, dass der Schaftteil 14 bei diesem dicken Blechteil sich innerhalb des Stanzloches 58 im Blechteil befindet, wobei das Stirnende 16 bzw. die Stirnseite des freien Endes des Stanzabschnitts 14 einen ausgeprägten Abstand von der Blechunterseite 62 aufweist. Dieser Abstand ist auch aus der Fig. 2E ersichtlich wie auch die Tatsache, dass die Lochwand des Blechmaterials im Bereich der Stanzkante 18 zylinderförmig über die Stanzkante 18 hinausragt. Die Fig. 2D zeigt auch wie der Flanschteil 12 der Einpressmutter satt an der Oberseite 54 des Blechteils 40 anliegt.

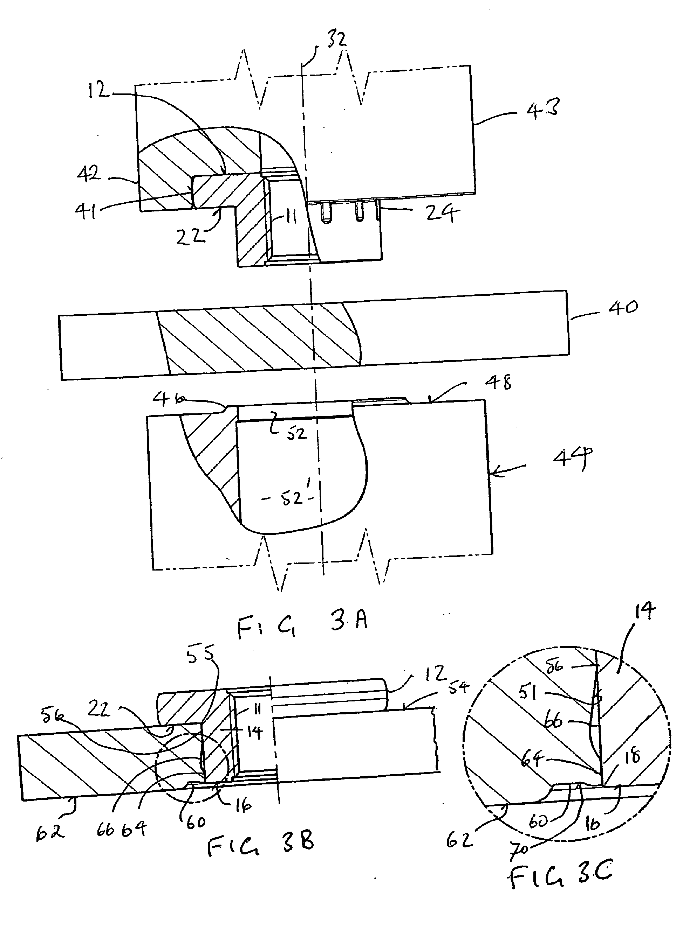

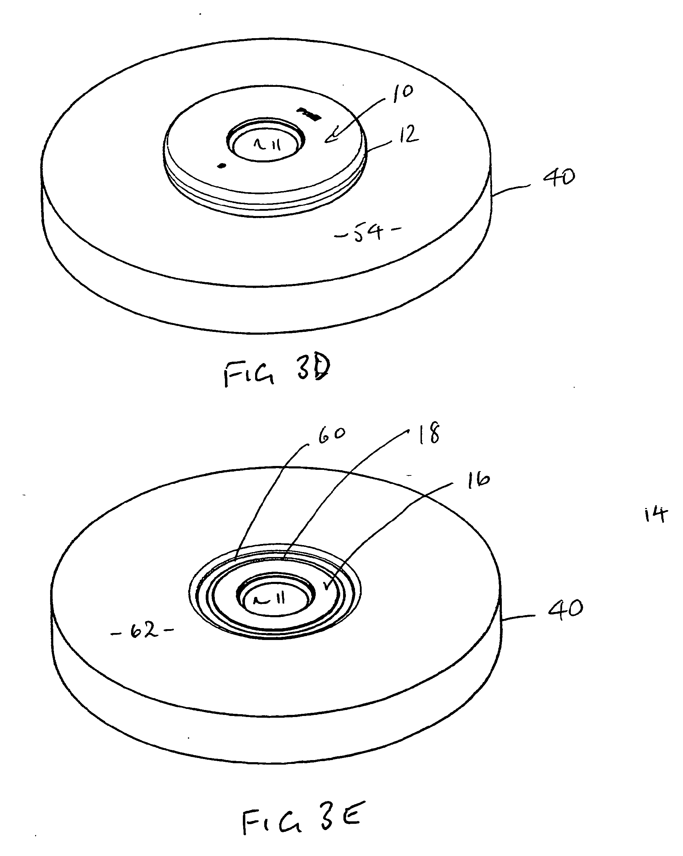

Die Fig. 3A bis 3D entsprechen weitgehend den Fig. 2A bzw. 2C bis 2E, zeigen jedoch, dass das gleiche Element 10 mit einem etwas dünneren dicken Blechteil verwendet wird. Die Figurenreihe 3A bis 3D hat keine Zeichnung entsprechend der Fig. 2B, da Fig. 2B eigentlich für beide Blechdicken gilt. Die Figurenreihe 3A bis 3D, ist aber sonst weitestgehend identisch mit der Figurenreihe 2A is 2E, weshalb die gleichen Bezugszeichen für die einzelnen Bestandteile verwendet werden und die gleiche Beschreibung auch für die Figuren der Figurenreihe 3A bis 3D gilt und deshalb nicht wiederholt wird. Der einzige wesentliche Unterschied liegt darin dass der Abstand zwischen dem freien Stirnende 16 des Stanzteils 14 und der Blechunterseite aufgrund der geringeren Blechdicke ebenfalls geringer ist. Dies har auch zur Folge, dass der Boden 70 der Ringnut 60 leicht oberhalb der Stanzkante 18 des Stanzteils 14 liegt. Auch hier liegt das Stirnende 16 oberhalb der Unterseite 62 des-Blechteils 40.

Es soll kurz erwähnt werden, dass ein Klebstoff sich zwischen dem Blechteil und dem hohlen Einpresselement eingesetzt werden kann und zwar zwischen dem Blechteil 40 und der Blechanlagefläche 22 und/oder zwischen dem Blechteil 40 und dem ersten Bereich des Schaftteils 14 und/oder zwischen dem Blechteil 40 und dem zweiten Bereich des Schaftteils 14 und/oder zwischen dem Blechteil 40 und dem dritten Bereich des Schaftteils 14. Der Klebstoff kann zusätzlich zu oder anstelle der Verdrehsicherungsrippen 24 verwendet werden und kann auch einen Beitrag zur Auspresssicherheit leisten.

Ferner ist aus den Figuren ersichtlich, dass das Blechteil 40 zumindest im Bereich der Anbringung des Befestigungselementes vor und nach Anbringung des Befestigungselementes bis auf die genannte Ringnut 60 in einer Ebene liegt.

Das Einpresselement ist hier als fertige Mutterelement 10 mit Innengewinde 11 gezeigt, d.h. das Befestigungselement 10 weist einen hohlen Schaftteil mit einem mittleren Gewinde 11 auf, das sich durch den Flanschteil 12 und den Schaftteil 14 hindurcherstreckt. Das Element könnte aber auch ohne Gewinde ausgebildet sein und bspw. als Lagerbuchse dienen. Es könnte auch mit einer glatten Bohrung zur Aufnahme einer ein Gewinde formenden oder schneidenden Schraube ausgelegt werden.

Ferner soll erwähnt werden, dass das Anwendungsgebiet der hier beanspruchten Einpresselemente nicht auf die Herstellung von LKWs beschränkt ist, sondern alle Gebieten umfasst, wo Blechteile entsprechender Stärke verwendet werden, die mit Befestigungselementen versehen werden müssen.

Bei allen Ausführungsformen können als Beispiel für den Werkstoff der Befestigungselemente alle Materialien genannt werden, die im Rahmen der Kaltverformung die Festigkeitswerte der Klasse 8 gemäß ISO-Standard oder höher erreichen, beispielsweise eine 35B2-Legierung gemäß DIN 1654. Die so gebildeten Befestigungselemente eignen sich u.a. für alle handelsüblichen Stahlwerkstoffe für ziehfähige Blechteile wie auch für Aluminium oder dessen Legierungen. Auch können Aluminiumlegierungen, insbesondere solche mit hoher Festigkeit, für die Befestigungselemente benutzt werden, z.B. AlMg5. Auch kommen Befestigungselemente aus höherfesten Magnesiumlegierungen wie beispielsweise AM50 in Frage.

## Patentansprüche

1. Selbststanzendes hohles Einpresselement (10), insbesondere Mutterelement zur Anbringung an ein Blechteil (40), wobei das Einpresselement (10) einen Flanschteil (12) größeren Durchmessers (D1) und einen Schaftteil kleineren Durchmessers (D2) aufweist, wobei der Schaftteil (14) sich vom Flanschteil (12) weg erstreckt und an seinem dem Flanschteil abgewandten Stirnende (16) eine kreisförmige Stanzkante (18) aufweist, wobei die dem Schaftteil zugewandte Seite des Flanschteils (12) eine ringförmige Blechanlagefläche (22) bildet und Verdrehsicherungsmerkmale (24) am Schaftteil (14) vorgesehen sind, die sich von etwa der Höhe der Blechanlagefläche (22) über einen Teil der Länge des Schaftteils (14) an diesem entlang erstrecken,
**dadurch gekennzeichnet,**
**dass** radial innerhalb der ringförmigen Blechanlagefläche (22) eine ringförmige Vertiefung (26) im Flanschteil (12) vorgesehen ist und dass überschüssiges Material (28) des Schaftteils (14), das durch Herstellung der Verdrehsicherungsrippen (24) entsteht, sich innerhalb der ringförmigen Vertiefung (26) befindet.

2. Selbststanzendes hohles Einpresselement nach Anspruch 1,
**dadurch gekennzeichnet,**
**dass** die Verdrehsicherungsmerkmale (24) durch Verdrehsicherungsnasen bzw. -rippen gebildet sind, die sich in axialer Richtung (32) des Schaftteils (14) an diesen entlang erstrecken.

3. Selbststanzendes hohles Einpresselement (10), insbesondere Mutterelement zur Anbringung an ein Blechteil (40), wobei das Einpresselement (10) einen Flanschteil (12) größeren Durchmessers (D1) und einen Schaftteil (14) kleineren Durchmessers (D2) aufweist, wobei der Schaftteil (14) sich vom Flanschteil (12) weg erstreckt und an seinem dem Flanschteil abgewandten Stirnende (16) eine kreisförmige Stanzkante (18) aufweist, wobei die dem Schaftteil (14)zugewandte Seite des Flanschteils (12) eine ringförmige Blechanlagefläche (22) bildet,
**dadurch gekennzeichnet,**
**dass** der kleinere Durchmesser (D2) bei
einer M6 Mutterelement bei etwa 15 mm,
einer M8 Mutterelement bei etwa 16 mm,
einer M10 Mutterelement bei etwa 17 mm,
einer M 12 Mutterelement bei etwa 18 mm und
einer M16 Mutterelement bei etwa 19,5 mm liegt.

4. Selbststanzendes hohles Einpresselement (10), nach Anspruch 3,
**dadurch gekennzeichnet,**
**dass** es zur Anwendung mit einem Blechteil (40) aus Stahl mittlerer Fertigkeit mit 8 mm Dicke ausgelegt ist.

5. Verfahren zur Herstellung einer selbststanzenden Einpressmutter (10) mit einem Flanschteil (12) größeren Durchmessers (D1) und einem sich vom Flanschteil weg erstreckenden Schaftteil (14) kleineren Durchmessers (D2), wobei der Schaftteil (14) an seinem dem Flanschteil (12) abgewandten Stirnende (16) eine kreisförmige Stanzkante (18) aufweist,
**dadurch gekennzeichnet,**
**dass** man einen Rohling (2) mit einer Querschnittsform entsprechend der des Flanschteils (12) und des Schaftteils (14) nimmt, wobei beim Rohling (2) der Schaftteil im Bereich des freien Endes einen kleineren Durchmesser (D2) aufweist als im Bereich benachbart zum Flanschteil (12),
**dass** eine axiale Vertiefung (26) im Flanschteil (12) benachbart zum Schaftteil (14) gebildet wird und
**dass** mittels eines Schiebers Material vom Bereich des Schaftteils mit dem größeren Durchmesser (D2') an mehreren umfangsmäßig einen Abstand aufweisenden Stellen axial weggeschabt wird, wobei das weggeschabte Material in die axiale Vertiefung (26) des Flanschteils (12) hineingebracht wird und in Bereichen zwischen den weggeschabten Bereichen Nasen bzw. Rippen verbleiben, die Verdrehsicherungsmerkmale (24) des Elementen (10) bilden.

6. Verfahren zur Anbringung eines selbststanzenden Einpresselementes (10) an einem Blechteil (40), bei dem ein Einpresselement gemäß zumindest einem der Ansprüche 1 bis 4 zum Einsatz gelangt und bei dem das Blechteil auf einer Matrize (44) abgestützt wird, die eine zylindrische Öffnung (52, 52') aufweist mit einem Durchmesser größer als der Durchmesser (D2) des Schaftteils (14) im Bereich zur kreisförmigen Stanzkante (18), wobei durch Druck auf den Flanschteil (12) des selbststanzenden Einpresselements (10) dessen Schaftteil (14) zur Bildung eines Stanzlochs (58) im Blechteil durch dieses hindurchgepresst wird, wodurch das Stanzloch (58) in Einpressrichtung bezogen auf die Längsachse (52) des Stanzloches in etwa konusförmig divergiert und nach Ausbildung des entsprechenden Stanzbutzens (50) das Blechmaterial im Bereich um die Stanzkante (15) herum zur Ausbildung einer ringförmigen Vertiefung (60) im Blechteil (40) mittels einer Ringnase (46) der Matrize (44) eingepresst wird, wodurch das Blechmaterial radial nach innen verformt wird und sich am Schaftteil (14) des Einpresselementes (10) im Bereich dessen freien Endes (16) anliegt.

## Claims

1. A self-piercing hollow press-in element (10), in particular a nut element for attachment to a sheet metal part (40), wherein the press-in element (10) has a flange part (12) of a larger diameter (D1) and a shaft part of a smaller diameter (D2), with the shaft part (14) extending away from the flange part (12) and having a circular piercing edge (18) at its end face (16) remote from the flange part, wherein the side of the flange part (12) facing the shaft part forms a sheet metal contact surface (22) in ring shape and features (24) providing security against rotation are provided at the shaft part (14) which extend approximately from the level of the sheet metal contact surface (22) over a part of the length of the shaft part (14) along the latter,
**characterized in that**
a ring recess (26) is provided radially within the ring-shaped sheet metal contact surface (22) in the flange part (12) and **in that** excess material (28) of the shaft part (14) which arises during manufacture of the ribs (24) providing security against rotation is located within the ring recess (26).

2. A self-piercing hollow press-in element in accordance with claim 1,
**characterized in that**
the features (24) providing security against rotation are formed by noses or ribs providing security against rotation which extend in the axial direction (32) of the shaft part (14) along the latter.

3. A self-piercing hollow press-in element (10), in particular a nut element, for attachment to a sheet metal part (40), wherein the press-in element (10) has a flange Part (12) of larger diameter (D1) and a shaft part (14) of smaller diameter (D2), with the shaft part (14) extending away from the flange part (12) and having a circular piercing edge (18) at its end face (16) remote from the flange part, with the side of the flange part (12) facing the shaft part (14) forming a ring-like sheet metal contact surface (22),
**characterized in that**
the smaller diameter (D2) lies
at approximately 15 mm for an M6 nut element,
at approximately 16 mm for an M8 nut element,
at about 17 mm for an M10 nut element,
at about 18 mm for an M12 nut element, and
at about 19.5 mm for an M16 nut element.

4. A self-piercing hollow press-in element (10) in accordance with claim 3,
**characterized in that**
it is designed for use with a sheet metal part (40) of steel of average strength with 8 mm thickness.

5. A method for manufacturing a self-piercing press-in nut (10) having a flange part (12) of larger diameter (D1) and a shaft part (14) of smaller diameter (D2) extending away from the flange part, with the shaft part (14) having a circular piercing edge (18) at its end face (16) remote from the flange part (12),
**characterized in that**
a blank (2) is taken having a cross-sectional shape corresponding to that of the flange part (12) and the shaft part (14), with the shaft part having a smaller diameter (D2) in the blank (2) in the region of the free end than in the region adjacent to the flange part (12),
**in that** an axial recess (26) is formed in the flange part (12) adjacent to the shaft part (14) and
**in that** material of the region of the shaft part having the larger diameter (D2') is scraped away at a plurality of peripherally spaced apart positions by means of a scraper, with the scraped away material being introduced into the axial recess (26) of the flange part (12) and with noses or ribs remaining in regions between the scraped away regions and forming features (24) of the element (10) providing security against rotation.

6. A method for attaching a self-piercing press-in element (10) to a sheet metal part (40) in which a press-in element in accordance with at least one of the claims 1 to 4 is used and in which the sheet metal part is supported on a die button (44) which has a cylindrical opening (52, 52') having a diameter larger than the diameter (D2) of the shaft part (14) in the region toward the circular piercing edge (18); wherein the shaft part (14) of the press-in element is pressed by pressure on the flange part (12) of the self-piercing press-in element (10) through the sheet metal part to form a pierced opening (58) of the sheet metal part, whereby the pierced opening (58) diverges approximately conically in the press-in direction in relation to the longitudinal axis (52) of the pierced opening and, after formation of the corresponding piercing slug (50), the sheet metal material in the region around the piercing edge (15) is pressed to form a ring recess (60) in the sheet metal part (40) by means of a ring nose (46) of the die button (44,) whereby the sheet metal material is deformed radially inwardly and contacts the shaft part (14) of the press-in element (10) in the region of its free end (16).

## Revendications

1. Élément creux auto-poinçonneur à enfoncer par pressage (10), en particulier élément formant écrou à rapporter sur une pièce en tôle (40), dans lequel l'élément à enfoncer par pressage (10) comprend une partie formant bride (12) de grand diamètre (D1) et une partie formant tige de petit diamètre (D2), dans lequel la partie formant tige (14) s'étend depuis la partie formant bride (12) et comporte, à son extrémité frontale (16) détournée de la partie formant bride, une arête de poinçonnage (18) de forme circulaire, de sorte que le côté, tourné vers la partie formant tige, de la partie formant bride (12) forme une surface d'appui sur tôle (22) de forme annulaire, et dans lequel il est prévu sur la partie formant tige (14) des éléments antirotation (24), qui s'étendent approximativement à partir de la hauteur de la surface d'appui sur tôle (22) le long de la partie formant tige (14) sur une partie de la longueur de celle-ci,
**caractérisé en ce que**
il est prévu un renfoncement (26) de forme annulaire dans la partie formant bride (12), radialement à l'intérieur de la surface d'appui sur tôle (22) de forme annulaire, et **en ce que** le matériau excédentaire (28) de la partie formant tige (14), qui apparaît en raison de la formation des nervures antirotation (24), se trouve à l'intérieur du renfoncement (26) de forme annulaire.

2. Élément creux auto-poinçonneur à enfoncer par pressage selon la revendication 1,
**caractérisé en ce que** les éléments antirotation (24) sont formés par des ergots ou des nervures antirotation, qui s'étendent le long de la partie formant tige (14) en direction axiale (32) de celle-ci.

3. Élément creux auto-poinçonneur à enfoncer par pressage (10), en particulier élément formant écrou à rapporter sur une pièce en tôle (40), dans lequel l'élément à enfoncer par pressage (10) comprend une partie formant bride (12) de grand diamètre (D1) et une partie formant tige (14) de petit diamètre (D2), dans lequel la partie formant tige (14) s'étend en éloignement de la partie formant bride (12) et comporte, à son extrémité frontale (16) détournée de la partie formant bride, une arête de poinçonnage (18) de forme circulaire, et le côté, tourné vers la partie formant tige (14), de la partie formant bride (12), forme une surface d'appui sur tôle (22) de forme annulaire,
**caractérisé en ce que**
le petit diamètre (D2) s'élève à
environ 15 mm pour un élément formant écrou de type M6,
environ 16 mm pour un élément formant écrou de type M8,
environ 17 mm pour un élément formant écrou de type M10,
environ 18 mm pour un élément formant écrou de type M 12, et environ 19,5 mm pour un élément formant écrou de type M16.

4. Élément creux auto-poinçonneur à enfoncer par pressage (10) selon la revendication 3, **caractérisé en ce que**
il est conçu pour être utilisé avec une pièce en tôle (40) en acier de qualité moyenne d'une épaisseur de 8 mm.

5. Procédé pour la fabrication d'un écrou auto-poinçonneur à enfoncer par pressage (10) comportant une partie formant bride (12) de grand diamètre (D1) et partie formant tige (14) de petit diamètre (D2), s'étendant en éloignement de la partie formant bride, dans lequel la partie formant tige (14) comporte, à son extrémité frontale (16) détournée de la partie formant bride (12), une arête de poinçonnage (18) de forme circulaire,
**caractérisé en ce que**
on prend une ébauche (2) avec une forme de section transversale correspondant à celle de la partie formant bride (12) et de la partie formant tige (14), telle que dans l'ébauche (2) la partie formant tige présente dans la région de l'extrémité libre un diamètre petit (D2) que dans la région voisine de la partie formant bride (12),
on forme un renfoncement axial (26) dans la partie formant bride (12) voisine de la partie formant tige (14), et
au moyen d'un coulisseau, on racle du matériau depuis la région de la partie formant tige présentant le grand diamètre (D2) axialement en éloignement à plusieurs emplacements présentant une distance en sens circonférentiel, de sorte que le matériau enlevé par raclage est introduit dans le renfoncement axial (26) de la partie formant bride (12) et que, dans des régions entre les régions enlevées par raclage, il demeure des ergots ou des nervures qui forment les éléments antirotation (24) de l'écrou (10).

6. Procédé pour rapporter un élément auto-poinçonneur à enfoncer par pressage (10) sur une pièce en tôle (40), dans lequel on emploie un élément à enfoncer par pressage selon l'une au moins des revendications 1 à 4, et dans lequel la pièce en tôle est soutenue sur une matrice (44) qui présente une ouverture cylindrique (52, 52') avec un diamètre grand que le diamètre (D2) de la partie formant tige (14) dans la région vers l'arête de poinçonnage (18) de forme circulaire, dans lequel en appliquant une pression sur la partie formant bride (12) de l'élément auto-poinçonneur à enfoncer par pressage (10), sa partie formant tige (14), en vue de réaliser un trou de poinçonnage (58) dans la pièce en tôle, est enfoncée par pressage à travers celle-ci, suite à quoi le trou de poinçonnage diverge approximativement sous forme conique, dans la direction d'enfoncement par référence à l'axe longitudinal (52) du trou de poinçonnage et, après formation de la pastille de poinçonnage correspondante (50), le matériau de la tôle est enfoncé par pressage, dans la région tout autour de l'arête de poinçonnage (15), en vue de réaliser un renfoncement de forme annulaire (60) dans la pièce en tôle (40), au moyen d'un ergot annulaire (46) de la matrice (44), en raison de quoi le matériau de la tôle est déformé radialement vers l'intérieur et vient s'appliquer contre la partie formant tige (14) de l'élément à enfoncer par pressage (10) dans la région de son extrémité libre (16).
